# EUROPEAN PATENT APPLICATION

(11) **EP 4 553 806 A1**
(43) Date of publication of application: **14.05.2025**
(21) Application number: 23831976.8
(22) Date of filing: 03.07.2023
(51) Int. Cl.: G08G 1/00

(54) **UNMANNED GROUND-TRAVELING ROBOT TRAVELING AND PASSING METHOD FOR ENSURING PEDESTRIAN TRAFFIC PRIORITY ON PUBLIC ROAD**

(30) Priority: 01.07.2022 US 202263357658 P; 11.10.2022 US 202263415253 P
(71) Applicant: LG Electronics Inc., Yeongdeungpo-gu Seoul 07336 (KR)
(72) Inventor: KIM, Heejin, Seoul 06772 (KR); SEO, Hanbyul, Seoul 06772 (KR)
(74) Representative: Plasseraud IP
(86) International application number: PCT/KR2023/009343
(87) International publication number: WO 2024/005618

(57) **Abstract**

An operating method of a first device (100) in a wireless communication system is presented. The method may comprise the steps of: determining that a first device (100) interrupts walking of a pedestrian; and determining, on the basis of the determination that the first device (100) interrupts walking of the pedestrian, whether to perform a first operation for preventing the interruption.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for driving, by a first device, based on wireless communication may be proposed. For example, the method may comprise: determining that the first device obstructs a traffic of a pedestrian; and determining whether to perform a first operation for preventing the obstruction, based on the determination that the first device obstructs the traffic of the pedestrian, wherein the first operation may include a group driving with a second device.

According to an embodiment of the present disclosure, a first device driving based on wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining that the first device obstructs a traffic of a pedestrian; and determining whether to perform a first operation for preventing the obstruction, based on the determination that the first device obstructs the traffic of the pedestrian, wherein the first operation may include a group driving with a second device.

According to an embodiment of the present disclosure, a device adapted to control a first robot may be proposed. For example, the device may comprise: at least one processor; and at least one memory operably connected to the at least one processor and storing instructions that, based on being executed by the at least one processor, cause the first robot to perform operations. For example, the operations may comprise: determining that the first robot obstructs a traffic of a pedestrian; and determining whether to perform a first operation for preventing the obstruction, based on the determination that the first robot obstructs the traffic of the pedestrian, wherein the first operation may include a group driving with a second robot.

According to an embodiment of the present disclosure, a non-transitory computer-readable storage medium storing instructions may be proposed. For example, the instructions, based on being executed, may cause a first device to: determine that the first device obstructs a traffic of a pedestrian; and determine whether to perform a first operation for preventing the obstruction, based on the determination that the first device obstructs the traffic of the pedestrian, wherein the first operation may include a group driving with a second device.

According to an embodiment of the present disclosure, a method for driving, by a second device, based on wireless communication may be proposed. For example, the method may comprise: receiving, from a first device, first information; and performing a group driving with the first device based on the first information, wherein the first information may include at least one of a presence of the first device, a position of the first device, or information for a group driving region.

According to an embodiment of the present disclosure, a second device driving based on wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first information; and performing a group driving with the first device based on the first information, wherein the first information may include at least one of a presence of the first device, a position of the first device, or information for a group driving region.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an unmanned ground robot determining and/or modifying its own driving path, according to one embodiment of the present disclosure.
FIG. 4 shows a procedure in which a first device determines whether it is obstructing a pedestrian's traffic and performs an operation to clear the obstruction, according to one embodiment of the present disclosure.
FIG. 5 shows a procedure in which a first device determines whether it is obstructing a pedestrian's traffic and performs an operation to clear the obstruction, according to one embodiment of the present disclosure.
FIG. 6 shows a procedure in which a first device receives information from a server for whether it is obstructing a pedestrian's traffic and performs an operation to clear the obstruction, according to one embodiment of the present disclosure.
FIG. 7 shows an example of an unmanned ground robot performing a group driving on a crosswalk, according to one embodiment of the present disclosure.
FIG. 8 shows an example of an unmanned ground robot performing group driving on a sidewalk, according to one embodiment of the present disclosure.
FIG. 9 shows a procedure in which a first device performs group driving, according to one embodiment of the present disclosure.
FIG. 10 shows a procedure for a first device to drive based on wireless communication, according to one embodiment of the present disclosure.
FIG. 11 shows a procedure for a second device to drive based on wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

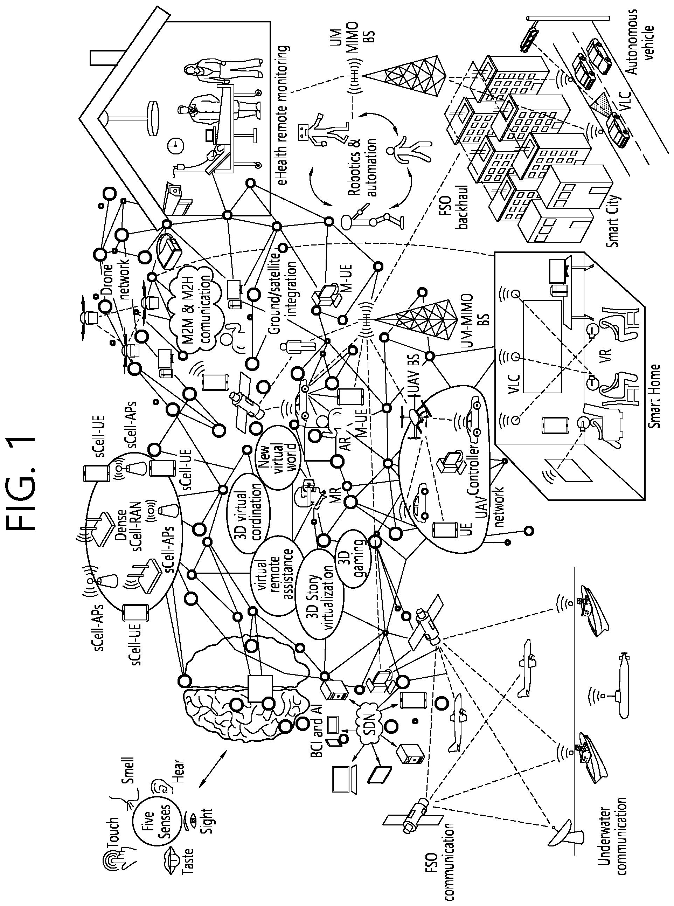

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

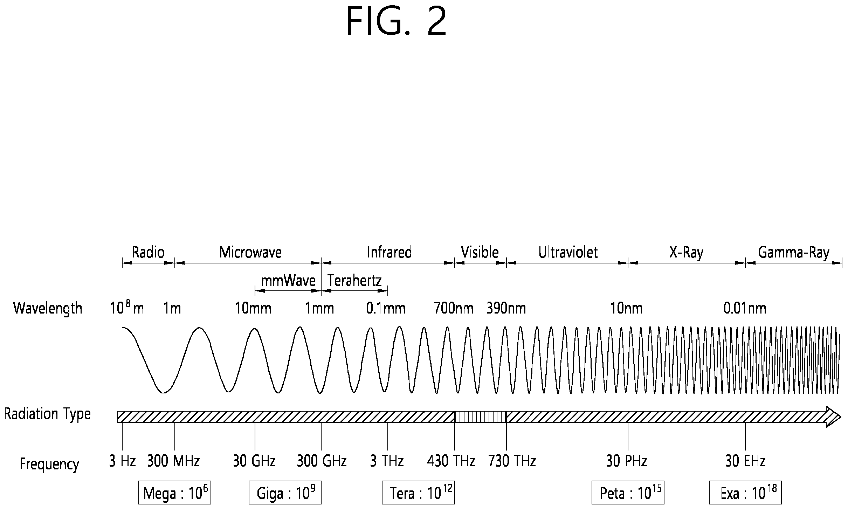

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

Below, prior art related to various embodiments of the present disclosure is described.

For example, social issues/changes such as the increasing share of last mile delivery costs, rising labor costs, and the continuation of the COVID-19 pandemic have accelerated the appearance of unmanned ground robots that provide services such as food/grocery delivery, road repair/cleaning, parcel delivery, and patrol. At the same time, regulatory discussions in various countries have begun to actively discuss whether and under what conditions unmanned ground robots are allowed to operate on public roads.

For example, in Pennsylvania, delivery robots must be capable of both autonomous and remote driving, and must drive no faster than 12 mph in pedestrian regions (e.g., crosswalks, sidewalks) and no faster than 35 mph in driveways and shoulders. In addition, if a delivery robot drives in a pedestrian region, the delivery robot shall ensure the passage priority of pedestrians and bicyclists, etc. by performing yielding operations to prevent collisions and/or obstructions to pedestrians and bicyclists, etc. when such collisions and/or obstructions are expected.

While each law is slightly different, the general rule is that if a delivery robot drives through a pedestrian region, it must give passage priority to pedestrians or yield to them.

According to one embodiment of the present disclosure, a method for driving and passing of an unmanned ground robot (e.g., a delivery robot) to ensure passage priority for pedestrians and/or vehicles on a public roadway (e.g., sidewalk, crosswalk, shoulder, driveway) is proposed.

For example, as used herein, "unmanned ground robot" may refer to a robot that drives on the ground without a human (driver and/or non-driver passengers) aboard. For example, this type of robot may drive via fully autonomous driving technology, drive via remote driving/control technology, or drive via a selection/combination of the above two driving technologies depending on the robot's surroundings/driving situation. Furthermore, for example, an unmanned ground robot may include various types of robots, depending on whether the robot is designed and/or produced to perform a service and/or role, such as driving on the ground without a human.

For example, a door-to-door food delivery robot, a robot that delivers goods from a convenience store to a customer's home, a garbage collection robot, a road maintenance robot, a patrol robot, etc. may be examples of unmanned ground robots that provide different services. The features described below are not limited to the robot providing a specific service, and may be equally (or similarly) applicable regardless of the service provided by the robot or the speed/size of the robot.

As described below, "pedestrian traffic obstruction by a robot" may refer to concepts and/or events that are different from typical vehicle-pedestrian or pedestrian-pedestrian collisions (or, the risk of collisions).

For example, a pedestrian traffic obstruction may refer to a potential collision risk between a robot and a pedestrian, or it may refer to a condition in which a pedestrian is unable to proceed forward, or in which such an event is expected to occur, due to a robot positioned in the pedestrian's direction of movement occupying and/or driving on a roadway and/or space intended for pedestrian traffic. Furthermore, pedestrian traffic obstruction by a robot may include not only that the robot occupies and/or is parked in a space intended for pedestrian traffic, but also that the robot's driving speed is too fast or too slow, causing pedestrians to have difficulty or feel threatened. Also, for example, if the robot and pedestrian intend to travel on the same path at (approximately) the same time and their paths overlap, the robot may determine that it is not obstructing the pedestrian by yielding passage priority to the pedestrian.

Meanwhile, hereinafter, an unmanned ground driving robot for ensuring pedestrian passage priority on a public roadway is described, but this disclosure may be equally/similarly applied to private land that is not a public roadway, and may be equally or similarly utilized for the purpose of "avoiding and/or reducing the collision risk between a robot and a pedestrian (or, a vehicle, rider of a bicycle (or, a motorcycle, scooter, or motorized two-wheeler), or a transportation disadvantaged person (e.g., a wheelchair user)" rather than for the purpose of "ensuring pedestrian passage priority".

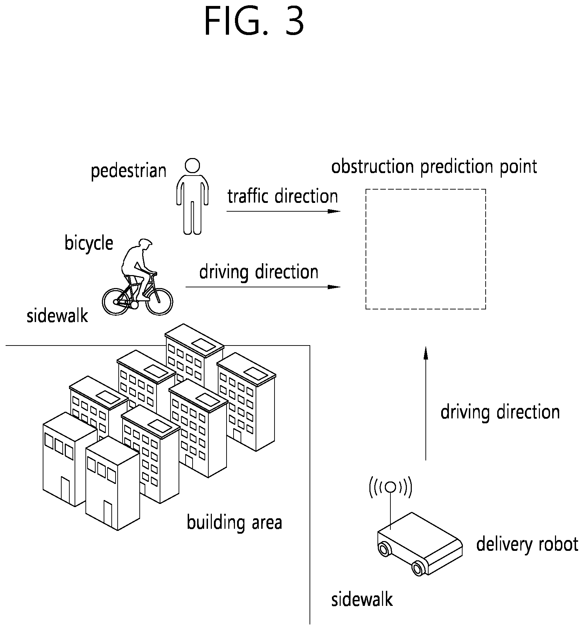

FIG. 3 shows an example of an unmanned ground robot determining and/or modifying its own driving path, according to one embodiment of the present disclosure. The embodiment of FIG. 3 may be combined with various embodiments of the present disclosure.

Referring to FIG. 3, a bicyclist, a pedestrian, and a delivery robot (unmanned ground robot) that are driving or traveling on a sidewalk are shown. For example, the delivery robot may predict a prediction point of obstruction that it may cause by referring to the direction of driving or walking shown in FIG. 3.

For example, it may be difficult to observe the presence and/or driving or traveling direction of bicyclists and pedestrians due to obstruction of the view of a building area or the like, but the unmanned ground robot described in this disclosure may perform signaling exchanges such as wireless communication to obtain information for the presence and/or driving or traveling direction of the bicyclists and pedestrians, and utilize it for prediction operation of the obstruction prediction point.

According to one embodiment of the present disclosure, an unmanned ground robot may determine or modify its driving path based on one or more of the following factors to avoid obstructing the travel of a pedestrian (and/or a rider of a bicycle, scooter, wheelchair, etc.) traveling on a sidewalk, if the unmanned ground robot expects that its driving on the sidewalk will obstruct the travel of the pedestrian in the current future (within a specific time period).
1. Its current position, the currently set driving path, and alternative path(s) other than the one it's currently driving
2. whether its current position and/or driving path is obstructing nearby pedestrians and the level of obstruction
3. whether it is obstructing nearby pedestrians and the level of obstruction (and, whether it would result in a lower level of pedestrian traffic obstruction than the current path) if it were to change to an alternative path that it could consider.
4. the current position and/or driving path, and/or whether the driving path can be changed/modified, of the neighboring robots.
5. the case where the number of nearby pedestrians and/or the density and/or distribution (of pedestrians located in a specific area and/or unit area) is greater than or equal to a pre-configured threshold
6. the case where the current position of a nearby pedestrian can be identified, and/or the distance (horizontal, vertical, height, direction, etc.) between the pedestrian and the robot is less than or equal to a pre-configured threshold
7. the case where the type, width, and/or speed limit of the road it is driving on is greater than or equal to or less than equal to a pre-configured threshold
   - the case where the roadway is a shoulder, sidewalk, crosswalk, or where the robot and pedestrian drive together on a one-way road
   - the case where it (or a pedestrian) enters or exits a shoulder, sidewalk, and/or crosswalk (or, [x] seconds before, or [x] meters before, or [x] meters after, the event)
   - the case where the width of the road is [x]m or less
   - Information for the driving environment may be (1) obtained via infra-to-robot communication (e.g., information provided by municipalities, police, and/or road operators), (2) obtained via equipment (or modules) such as sensors/cameras adapted to (or mounted on) the robot, (3) obtained via a message transmitted by a service provider to which the neighboring VRU, vehicle, robot, and/or infrastructure are subscribing received via direct communication, and/or cellular communication, or (4) obtained by reading information on a map received by (or adapted to) the robot.
8. whether a space exists on the sidewalk for the robot to drive and/or stop to avoid pedestrians, etc
   - Information for the driving environment may be (1) obtained through infra-to-robot communication (e.g., information provided by municipalities, police, and/or road operators), (2) obtained through equipment (or modules) such as sensors/cameras adapted on (or mounted on) a robot, (3) obtained by receiving messages from surrounding VRUs, vehicles, robots, and/or infrastructure, and/or a service provider to which the robot subscribes through direct communication and/or cellular communication, or (4) obtained by reading information on a map received by (or adapted to) the robot.
9. whether a robot can merge into a driveway and/or shoulder within a pre-configured time and/or distance (e.g., [x] seconds, or [x] meters) if the robot is unable to drive on the sidewalk to avoid pedestrians.
   - It may be related to the robot's current position, speed, heading, acceleration, and the surrounding map (e.g., surrounding terrain features, road configuration).

According to one embodiment of the present disclosure, an "operation to determine or modify a driving path" of a robot may refer to any of the following operations
1. operation to select an alternative path (that minimizes sidewalk driving) by modifying an existing path.
2. An operation that drives (almost) the same path as the existing path, but changes the type of road it drives on (e.g., sidewalk->driveway, sidewalk->shoulder, shoulder->driveway).
3. An operation that drives on (almost) the same path as the existing path, but in a specific region on the sidewalk (if not currently in a specific region, moves to that region) so that the width and/or extent of the sidewalk available for pedestrians to walk on is secured and/or maximized.
   - The "region" may be defined as a (semi-)fixed position by the relevant regulation or road operator, or may refer to a non-fixed position and/or space that is determined by a robot or the like to minimize the traffic obstruction that a robot may cause to pedestrians (at a specific moment and/or time interval).
4. i) it may include operations such as: i) moving into a robot waiting space that is not on a general roadway (or designated on a public roadway), ii) stopping and/or holding to enter a roadway (where pedestrian passage is expected to be obstructed), or pausing to stop and/or hold to enter, and/or iii) adjusting driving speed, direction, and/or acceleration to avoid coming within a specific (pre-configured) distance of a pedestrian whose passage is expected to be obstructed.

According to one embodiment of the present disclosure, if a robot is driving on a sidewalk and the sidewalk is narrow, such that there is not enough space for the robot to stop to avoid pedestrians, the robot may need to change the type of road it is driving on from a sidewalk to a shoulder and/or a driveway.

Furthermore, for example, the operation may only be applied in a geofenced area designated by a robot service operator, a municipality, a road operator, and/or a government, and/or in an area and/or region where a regulation governing the robot's pedestrian passage priority obligation is applied. For example, the region, the regulation, and/or whether the regulation applies may be information provided to a robot in advance, or may be information provided to the robot by infrastructure, service providers, nearby ITS stations, and/or a base station when entering the region and/or specific region (or when the robot is driving in the region and/or specific region).

Table 2 below describes more detailed operations associated with the above embodiments.

**[Table 2]**

| |
|---|
| 1. A UGR is approaching a sidewalk/crosswalk. |
| 2. The UGR receives information about VRUs and the sidewalk/crosswalk (e.g., location of VRUs, density/distribution of the VRUs, the number of VRUs, width/length of the sidewalk/crosswalk) from infrastructure or the VRUs. |
| 3. (when the UGR compares its planned path and the location/distribution of the VRUs) If it is expected that the UGR will disturb pedestrian traffic in the pedestrian area, UGR changes its route/operation to avoid the obstruction |
| - E.g., by making a detour around the area crowded by VRUs |
| - E.g., by pausing its operation (or stopping entering the sidewalk) and waiting until the VRUs on the sidewalk pass by |

Referring to Table 2, an unmanned ground vehicle (UGR) may access a sidewalk/crosswalk.

And, the UGR may receive information from an infrastructure or VRU for a Vulnerable Road Unit (VRU), the sidewalk/crosswalk (e.g., position of the VRU, density/distribution of the VRU, number of VRUs, width/length of the sidewalk/crosswalk).

And, if (if the UGR considers its planned path and the position/distribution of the VRUs) the UGR is expected to obstruct pedestrian traffic in a pedestrian region, the UGR may change its path/operation to avoid the obstruction.

For example, the UGR may avoid the obstruction by bypassing a region congested with VRUs.

For example, the UGR may pause its operation (or stop entering the sidewalk) and avoid the obstruction by waiting for the VRU on the sidewalk to pass by.

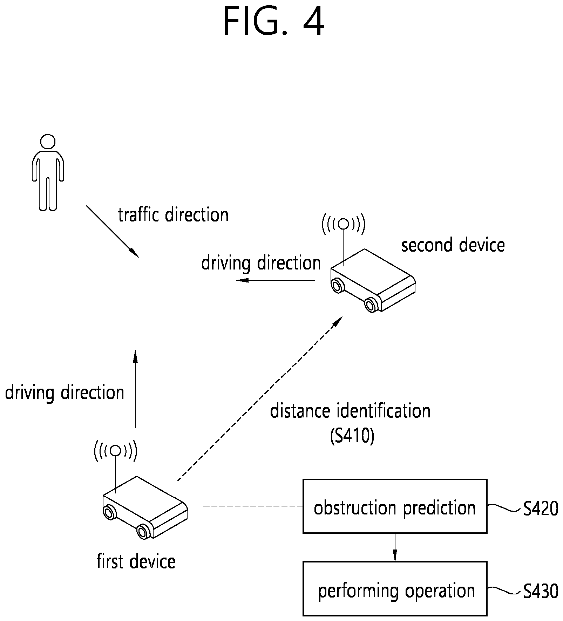

FIG. 4 shows a procedure in which a first device determines whether it is obstructing a pedestrian's traffic and performs an operation to clear the obstruction, according to one embodiment of the present disclosure. The embodiment of FIG. 4 may be combined with various embodiments of the present disclosure.

Referring to FIG. 4, at step S410, a first device may determine a distance from a second device and/or a driving direction of the second device. For example, the distance and/or driving direction may be determined based on the transmission or reception of a wireless signal or based on sensors and/or cameras adapted to the first device. For example, the first device and the second device may be an unmanned ground robot.

In step S420, the first device may predict whether the first device and/or the second device obstructs the pedestrian's traffic, based on the distance and/or the driving direction of the second device. In step S430, the first device may perform an operation to clear the obstruction. For example, the operation may include various operations described in the present disclosure, and may include, for example, pausing, moving to a robot driving region, group driving, modifying a path, and the like.

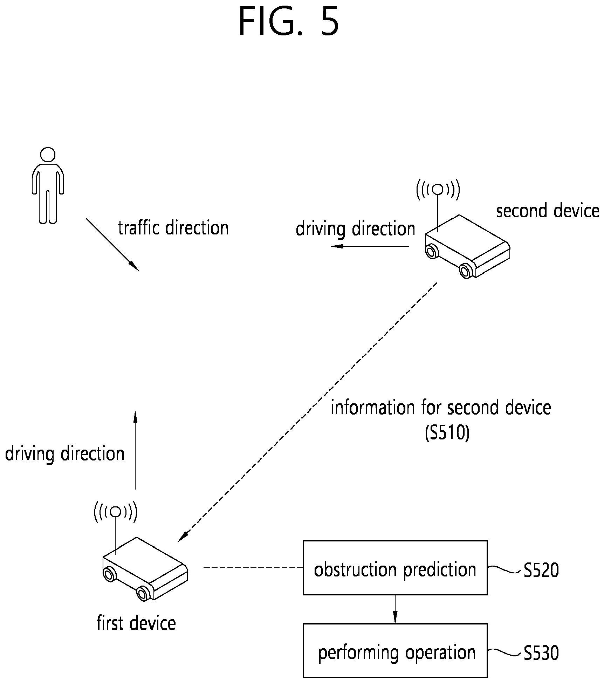

FIG. 5 shows a procedure in which a first device determines whether it is obstructing a pedestrian's traffic and performs an operation to clear the obstruction, according to one embodiment of the present disclosure. The embodiment of FIG. 5 may be combined with various embodiments of the present disclosure.

Referring to FIG. 5, at step S510, a first device may receive information for a second device from the second device. For example, the information may include a driving path, speed, direction, position, position of the second device, position of the pedestrian, traffic direction, speed, etc. of the second device. For example, the first device and the second device may be unmanned ground robots.

In step S520, the first device may predict, based on the received information, whether the first device and/or the second device obstructs the pedestrian's traffic. In step S530, the first device may perform an operation to remove the obstruction. For example, the operation may include various operations described in the present disclosure, and may include, for example, pausing, moving to a robot driving region, group driving, modifying a path, and the like.

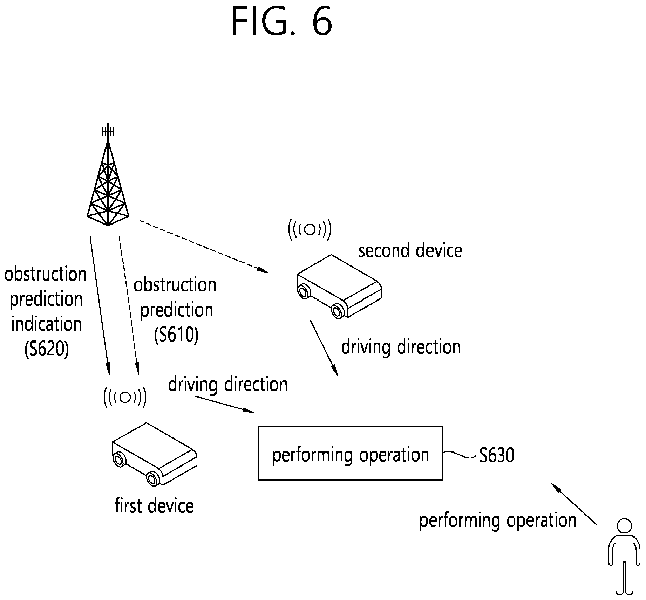

FIG. 6 shows a procedure in which a first device receives information from a server for whether it is obstructing a pedestrian's traffic and performs an operation to clear the obstruction, according to one embodiment of the present disclosure. The embodiment of FIG. 6 may be combined with various embodiments of the present disclosure.

Referring to FIG. 6, in step S610, a server (or a higher layer of an unmanned ground robot described herein, such as an infrastructure, service provider, or other unmanned ground robot) may observe the driving and traffic of a first device, a second device, and a pedestrian, and may predict that the first device and/or the second device will obstruct the pedestrian's traffic.

In step S620, the server may transmit to the first device an obstruction prediction indication that the first device will obstruct the pedestrian's traffic. In step S630, the first device may perform an operation to clear the obstruction. For example, the operation may include various operations described in the present disclosure, and may include, for example, pausing, moving to a robot driving region, group driving, modifying a path, and the like.

According to one embodiment of the present disclosure, even if an unmanned ground robot selects a driving method and/or path to avoid obstructing a pedestrian on a sidewalk according to the criteria and/or method described above, the probability of a pedestrian's traffic on the sidewalk being obstructed by the robot may increase if a large number of robots drive on the sidewalk, and if each robot waits or drives to avoid the pedestrian in different regions of the sidewalk, roadway, and/or shoulder, respectively, according to its own criteria and/or method. In view of this, when multiple robots are driving on a sidewalk, by causing the robots (following their own and neighboring robots) to drive together in a narrow or restricted region (on the roadway) in a similar direction and/or speed on the sidewalk (i.e., by performing group driving), the pedestrian's passage right on the sidewalk may be ensured.

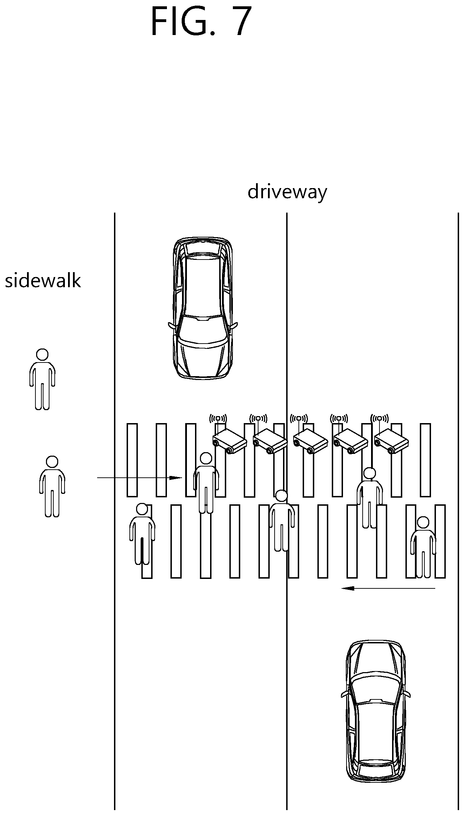

FIG. 7 shows an example of an unmanned ground robot performing a group driving on a crosswalk, according to one embodiment of the present disclosure. The embodiment of FIG. 7 may be combined with various embodiments of the present disclosure.

Referring to FIG. 7, a sidewalk, a driveway, and a crosswalk are shown. For example, a pedestrian and a plurality of unmanned ground robots may drive and walk on the crosswalk. For example, the plurality of unmanned ground robots may perform a group driving on a crosswalk. For example, the group driving may be performed in the form of driving closely together and in line in one direction on a crosswalk.

For example, the triggering, conditions, methods of the group driving, information transmitted/received related to the group driving, and/or features related to a leader may be determined and/or performed based on various embodiments of the present disclosure.

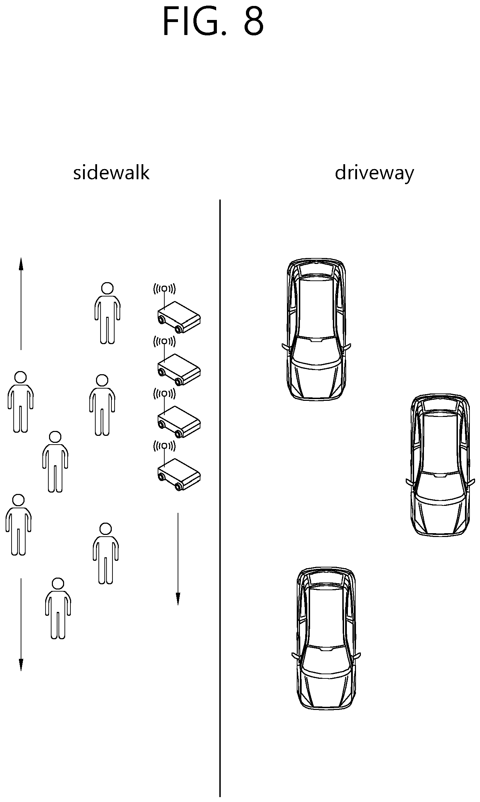

FIG. 8 shows an example of an unmanned ground robot performing group driving on a sidewalk, according to one embodiment of the present disclosure. The embodiment of FIG. 8 may be combined with various embodiments of the present disclosure.

Referring to FIG. 8, a sidewalk and a driveway are shown. For example, a pedestrian and a plurality of unmanned ground robots may drive and walk on a sidewalk. For example, the plurality of unmanned ground robots may perform a group driving on a sidewalk. For example, the group driving may be performed in the form of driving closely and in line in one direction (e.g., a driveway direction) on a sidewalk.

For example, the triggering, conditions, methods of the group driving, information transmitted/received related to the group driving, and/or features related to a leader may be determined and/or performed based on various embodiments of the present disclosure.

According to one embodiment of the present disclosure, a method for coordinating the sidewalk driving direction, speed, and/or region of robots based on an exchange of driving paths, intentions (based on direct communication, or cellular communication) between robots is proposed.

According to one embodiment of the present disclosure, a method for transmitting and receiving a message for (mutually) proposing and accepting to drive together in what direction/region on a sidewalk, whether to continue driving on the sidewalk, a time, and/or distance range to drive together in that direction/region, and the like is proposed.
- For example, prior to a proposal and/or acceptance, driving intention information such as current position, driving path, speed, direction, acceleration, etc. may be exchanged between the robots.
- For example, a proposal and/or acceptance may be judged and/or determined based on driving intention information exchanged between the robots, such as current position, driving path, speed, direction, acceleration, etc.

For example, one robot may be a leader and perform the role of coordinating the driving direction, speed, and/or region for pedestrian avoidance with one or more other robots.
- The operation may also be interpreted as an operation similar to clustering or platooning.

According to one embodiment of the present disclosure, a method for avoiding pedestrians without direct information/intention exchange between robots for driving direction/speed/region coordination on a sidewalk (for the purpose of avoiding and/or minimizing pedestrian obstruction) is proposed.
i. For example, a robot may determine whether to drive (directly) behind a robot that is driving ahead of it in its driving direction (to yield passage priority to a pedestrian) based on one or more of the following factors.
   1) the case where it is driving following another robot that is ahead of it, whether the region and/or distribution (the degree to which they are spread out on the sidewalk) that it and its neighboring robots occupy on the sidewalk decreases, or if the degree of decrease is greater than or equal to a pre-configured threshold
   2) the case where the similarity of the driving path between itself and the preceding robot is greater than or equal to a pre-configured threshold
      - the similarity may be determined based on a path prediction or information for a future path included in a previously received message from the preceding robot. For example, a similarity may be determined to exist if [X] or more of the path points representing the path prediction or path are within an error margin of [x]m.
   3) the case where the distance/direction difference in (final and/or intermediate) destinations between itself and the preceding robot is less than or equal to a pre-configured threshold.
   4) the case where the type, width, and/or speed limit of the road it is driving on is greater than or equal to or less than or equal to a pre-configured threshold
      - the case where a robot and pedestrian drive together when the road is a shoulder, sidewalk, crosswalk, or on a one-way street.
      - the case where the width of the roadway is less than or equal to [x]m
   5) the case where there is no space on the sidewalk for the robot to drive/stop to avoid pedestrians, etc. or the area/region is small, or the distance between the identified pedestrian (closest to the robot) and the robot (in the horizontal/vertical/height direction) is less than or equal to a pre-configured threshold
   6) the case where the number of robots on the sidewalk exceeds a (pre-configured) specific number, as judged based on information obtained from its sensors and/or neighboring vehicles (and/or pedestrians, robots, infrastructure, etc.), the case where the number of pedestrians walking on the sidewalk exceeds a (pre-configured) specific number, the case where the ratio of pedestrians to robots traveling on the sidewalk is greater than or equal to or less than or equal to a (pre-configured) specific value, or the case where the dispersion (the degree of distribution) of pedestrians on the sidewalk (in a specific area thereof) is greater than or equal to or less than or equal to a (pre-configured) specific value.
   7) the case where the remaining distance and/or time for the segment in which it needs to drive on the sidewalk (while obstructing pedestrians) is greater than or equal to a (pre-configured) specific value.
   8) the case where the distance between itself and the preceding robot is less than or equal to a (pre-configured) specific distance, the case where the distance between itself and the robot driving behind it is less than or equal to a (pre-configured) specific distance, and the case where the number of robots driving within [x] meters in front of (or behind) itself is greater than or equal to a (pre-configured) number
   9) the case where the robot is unable to merge into the driveway and/or shoulder within a pre-configured time and/or distance (e.g., [x] seconds or [x] meters)
   10) the case where the reduction in the degree and/or probability of obstructing pedestrians by group driving behind the preceding robot (as compared to not doing so) is greater than or equal to a specific level, or the case where the degree and/or probability is reduced to a level less than or equal to a specific level

In performing group driving of robots for pedestrian passage priority yielding, according to one embodiment of the present disclosure, two different application schemes may be considered depending on when or under what conditions the group driving of robots is triggered. For example, each scheme may require different detailed UE operations and interaction and/or signaling between the robots.

According to one embodiment of the present disclosure, a robot may adjust its path and/or driving direction to group drive with neighboring robots that are driving in the same environment, even if the robot determines that there are no pedestrians within a specific distance/region around it, or even if the robot determines that it is not a case that it is an immediate obstacle to pedestrians, if the robot is driving in an environment (e.g., sidewalk, crosswalk, shoulder) that it could potentially affect/obstruct the passage of pedestrians.
i. as an advantage of this operation, it may be possible to deal with potential pedestrian traffic obstructions in advance. For example, if a robot does not (quickly) recognize a pedestrian in its vicinity, or if a pedestrian suddenly appears or changes its driving path, the robot may be less likely to obstruct the pedestrian.
ii. For example, this operation may refer to deciding to follow a neighboring robot for group driving (regardless of other conditions) if the features/environment of the road on which the robot is driving corresponds to 4), 5), and/or 9) of the ten "conditions that determine whether the robot drives (directly) behind the neighboring robot" listed above.
   - In other words, if the road on which the robot is (will be) driving is a shoulder, sidewalk, crosswalk, or if the robot and a pedestrian are driving together on a one-way road, if the distance between the identified pedestrian (closest to the robot) and the robot (in the direction of horizontal, vertical, and/or height) is less than or equal to a pre-configured threshold, if the width of the road is less than or equal to [x]m, if the space for the robot to drive/stop to avoid the pedestrian, etc. is not available or narrow, if the robot cannot merge into a driveway and/or shoulder within a pre-configured time, and/or distance (e. g., [x] seconds or [x] meters), it may decide to group drive with neighboring UEs from the time point it enters the roadway (or is aware of entering the roadway). The information required to make this decision may be obtained by the robot from a map or navigation app, obtained using cameras and/or sensors on the robot, provided to the robot by a municipality, police, and/or road operator, or received from nearby ITS stations and/or robots.
   - For example, a robot may operate as the Table 3 below.

**[Table 3]**

| |
|---|
| When a UGR is entering a certain geographical area, the robot receives information about how the robot can follow a robot in front of it from infrastructure, server (of service operator) or other robots, and the UGR tries to minimize the area occupied by robots by running after other robots on the sidewalk/crosswalk (even though currently UGRs do not obstruct pedestrian traffic). |
| The geographical area includes sidewalks/crosswalks/right side of roadways. |
| The information sent from infrastructure or other robots can include position/speed/heading/acceleration of the robot(s) running in front of the ego-UGR, speed/heading/acceleration recommended for ego-UGR. |

For example, if a UGR is entering a specific geopolitical region, the robot receives information for how it will follow the robot in front of it from the infrastructure, the (service operator's) servers, or other robots, and the UGR attempts to minimize the occupied area by following the other robots on the sidewalk/crosswalk. (even if the UGRs are not currently obstructing pedestrian traffic).

For example, the geopolitical area may include a sidewalk, a crosswalk, and/or a shoulder.

For example, information transmitted from infrastructure or other robots may include the position/speed/direction/acceleration of the robots driving in front of the ego-UGR, and the recommended speed/direction/acceleration for the ego-UGR.

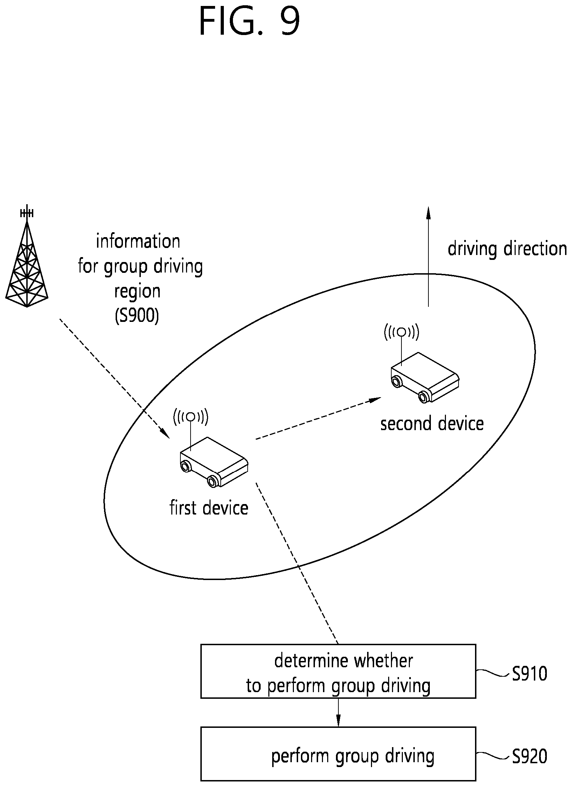

FIG. 9 shows a procedure in which a first device performs group driving, according to one embodiment of the present disclosure. The embodiment of FIG. 9 may be combined with various embodiments of the present disclosure.

Referring to FIG. 9, in step S900 (step S900 may not be required. If step S900 is not performed, the information for the group driving region may be pre-configured to the first device, or may be received from another device). The server (or a higher layer of the unmanned ground robot, such as a service provider, infrastructure, or the like) may transmit information for the group driving region to the first device. For example, the information may be information that the first device is currently driving within the group driving region.

In step S910, the first device may determine, based on the received information, based on the fact that it is in a group driving region, to perform group driving. In step S920, the first device may perform group driving with a second device. For example, the second device may be an unmanned ground robot that precedes the first device. The first device may follow behind the second device, and may eventually perform group driving in the same driving direction as the second device.
- For example, here, when a robot determines to perform group driving, an example of a method for determining which robots to follow and in which direction/region to drive together may be as follows.
   (1) A method for group driving by exchanging direct intention between robots for determining group driving region on a group driving path and sidewalk
- For example, while the robots are entering or remaining in a region where group driving (for priority yielding to pedestrian) is required, each robot (or the robot driving ahead of it, the leader of the group driving) may periodically/aperiodically transmit messages including its presence, position, and group driving region information on the sidewalk. And, upon receiving the messages via direct and/or cellular communication, other robots may group drive following the UE driving in front of them (or the leader of the group driving).
- For example, a provider of a service to which the RSU placed near a sidewalk, crosswalk, and/or shoulder and/or a robot subscribes (such as a server/cloud/MEC, etc. owned/operated by a provider) detects that a robot is entering or remaining in a region where group driving (for priority yielding to pedestrian) is required, and periodically/aperiodically transmit a message comprising the presence of such a robot, its position, group driving area information on the sidewalk (or, recommended group driving region provided by the RSU, municipalities, police, and/or road operators), etc. And, upon receiving the message via direct and/or cellular communication, other robots may group drive by following the robot driving in front of them (or the leader of the group driving).

For example, here, the method of detecting/judging by an RSU or a service provider's server/cloud/MEC that a robot is entering or remaining in a region where group driving (for priority yielding to pedestrian) is required may include detection via sensors/cameras, etc. and judgment via information obtained from received messages.

(2) A method for group driving without a direct intention exchange between robots for group driving region determination on group driving paths and sidewalks.
- For example, if a robot judges, based on information obtained from its sensors and/or cameras and/or information obtained from surrounding vehicles (or pedestrians, robots, infrastructure), that there is a robot driving ahead of it (in the same direction), the robot may move into the lane/region in which the corresponding robot is driving and group drive. For example, conversely, if the robot determines that no robot is driving ahead of it (in the same direction), the robot may drive on the path it is currently driving, along the innermost or outermost boundary of the sidewalk, or in a pre-configured/promised roadway region/direction.

For example, here, what region of the sidewalk to drive on if there is no robot ahead of it may be information provided by the municipality, police, road operator, and/or service provider to which the robot subscribes. In this case, the corresponding information may be pre-stored in a robot or received by the robot via direct and/or cellular communication.

According to one embodiment of the present disclosure, a robot may drive along its planned driving path if it is judged that there is no pedestrian within a specific distance/region around it, or even if there is a pedestrian, the robot is not an immediate obstacle to the pedestrian. On the other hand, the robot may decide to start/continue group driving only when it is judged that there is a pedestrian within a specific distance/region around it, or when it is judged that it is an obstacle to the passage of a specific pedestrian.
i. As an advantage of the above operation, each robot may drive efficiently on its own optimized driving path, even if the robot drives on a sidewalk, crosswalk, and/or shoulder, if it does not obstruct the traffic of pedestrians.
ii. For example, the operation may comprise determining to start group driving along with a neighboring robot on a sidewalk, crosswalk, and/or shoulder if the driving situation and/or environment of the robot corresponds to 1) and/or 5) ~ 10) of the 10 conditions listed earlier that determine whether the robot drives (directly) behind the neighboring robot.
   - For example, conditions 1) and/or 5) ~ 10) may be utilized as criteria for a robot to determine whether it (and neighboring robots) are obstructing a neighboring pedestrian.
   - Further, for example, since the condition under which group driving of a robot is triggered is a situation in which the robot is driving in an environment in which the robot may obstruct the passage of a pedestrian (it is related to the conditions 4), 5), 9)), while at the same time the robot is actually obstructing the passage of a pedestrian, this may refer to a situation in which 1) and/or 4) to 10) of the conditions for determining whether a robot drives (directly) behind a neighboring robot listed above are satisfied.
   - Further, for example, in this operation, the method of determining whether a pedestrian is present within a specific distance/region around the robot, or identifying a characteristic of the pedestrian (e.g., speed, acceleration, direction, etc.), may be obtained based on the robot detecting with its sensors, or receiving information transmitted from a (smart) RSU, another UGR, another ITS station (e.g., VRU comprising a vehicle, infrastructure, pedestrian, bicyclist), or a server of a provider of robot services.
   - On the other hand, with respect to condition 6), a situation may arise in which some of the robots driving on the sidewalk may notice that they are obstructing traffic, but other robots may have difficulty recognizing the pedestrian. For example, there may be a time point where a robot driving directly behind a pedestrian notices the pedestrian, but a robot approaching the pedestrian from a relatively large distance and at a relatively high speed may not notice the pedestrian. For example, in such a case, by exchanging information as shown in the example below, the robots driving behind may be made aware of the situation and made to decide to enter group driving mode in response to the situation.
      (1) The preceding robot that first notices a pedestrian (or the leader of the group driving, the robot driving most ahead, or the infrastructure/smartRSU installed on the corresponding roadway (e.g., sidewalk and/or crosswalk)) may inform the robots driving in the same direction behind it of the presence and/or position of the pedestrian (or the preceding robot, or the leader of the group driving) and/or region information on the sidewalk to be used for group driving (V2V, or V2N2V).

For example, a robot that receives such information may transmit a confirmation of receipt of the corresponding message, and/or a response to whether or not to join the group driving, information for the robots that will follow it in the group driving (position, station ID (temp ID), and information for the leader in the group driving) to the robots that are driving ahead of it (that transmitted the information earlier).

In this case, the preceding robots may transmit this information when they know whether the following robots have noticed a pedestrian (and only when they have not), or they may transmit this information regardless of whether the following robots know whether they have noticed a pedestrian.

### 1. In the former case.

* The method for the preceding robots to recognize and/or check whether the following robots have noticed a pedestrian may be based on information transmitted by the following robots (e.g., information for the pedestrian and/or object detected by the robots through cameras and/or sensors (e.g., transmitted using messages such as CPM)), or based on information obtained from a server, cloud, MEC, smart RSU, etc. to which the robots are connected.

That is, for example, a robot may check whether the following robots have noticed a pedestrian that they need to avoid (whose passage priority may be obstructed) through information transmitted by the robots following it, and inform the following robots of the presence and/or position of the pedestrian that they need to avoid (or itself, or the leader of the group driving (ahead of them)) and/or the region information on the sidewalk to be used for group driving, only if the robots have not noticed the pedestrian.

* Alternatively, if robots start and/or perform group driving to avoid obstructing pedestrian traffic, they may inform the robots behind them of the need to join the group driving and the region information on the sidewalk used for group driving only if it is judged (based on the information received from the robots' cameras and/or sensors or from other robots, vehicles, pedestrians, and infrastructure) that the distance to the robot driving behind them is less than or equal to a (pre-configured) specific distance, and that the robots behind them cannot join the group driving line if they continue to drive in their current driving path/direction.

### 2. In the latter case

* When the robots that first detect the pedestrian starts group driving in accordance with conditions 1) and/or 4) through 10), all, some, and/or the leader robot in the group may inform the presence and/or position of the pedestrian (or, the preceding robot, or the leader of the group driving) and/or the region information on the sidewalk to be used for group driving. For example, it may be appropriate for such information to be transmitted based on broadcast communication to neighboring robots, or based on groupcast communication to robots that are predicted to be positioned within a specific distance/radius of the pedestrian (considering, for example, the maximum distance at which a robot may detect the pedestrian, generally with sensors and/or cameras).

(2) When it is expected that a robot will obstruct the passage of a pedestrian (and/or when it is expected that it would be difficult for a specific robot to recognize that such an event is about to occur), the RSU installed near the sidewalk, crosswalk, and/or shoulder and/or the provider of the service to which the robot subscribes (including servers owned and/or operated by the provider, cloud, and/or MEC, etc.) may determine whether such an event has occurred, and then inform the robots of the presence and/or position of a pedestrian that the robots need to avoid (or a robot in a group driving ahead of the robot that will receive this message, or a robot that will be the leader in the group driving), and/or the region information on the sidewalk to be used for group driving. (I2V, I2N2V, or DL)
· In this case, the region information on the sidewalk to be used for group driving that the robot driving behind would receive may be judged by the RSU, the service provider's server, the cloud, and/or the MEC or the like based on robot/pedestrian driving status on the sidewalk at the moment, or it may be information for a (semi-stationary) region designated as a robot group driving region by the municipality, the police, and/or the road operator.

* For example, a robot may operate like the Table 4 below.

**[Table 4]**

| |
|---|
| Robots travel in the pedestrian area based on their own decision and planned path as long as there is no obstruction of the pedestrian traffic (and/or there is no pedestrian in the area). Only when there is a risk of the obstruction (and/or there is a pedestrian in the area), platooning-like operation is triggered for UGRs running in the pedestrian area. For example, |
| - the presence of pedestrian(s) can be detected by UGRs using their sensor information and/or using information (e.g., VRU awareness, sensor data) received from RSU, other UGRs, ITS stations in the vicinity, or service provider. |
| - Once the operation is triggered, the triggered event can be reported by a UGR (or RSU, ITS stations, or service provider) to other UGRs running on sidewalks/crosswalks to ask for their cooperation in the virtual group-based driving. Also, for more efficient virtual group-based driving of UGRs, the following information can be shared with other UGRs. |
| - the presence/location/speed/heading of the detected pedestrian(s) |
| - Location/ID/speed/heading/acceleration/planned path of a UGR (that is in the lead) for the virtual group-based driving. |

For example, robots may walk in a pedestrian region based on their own decisions and plans if there is no obstruction to pedestrian traffic (and/or if there are no pedestrians in the region). Only when there is a risk of obstruction (and/or when pedestrians are present in the region), operations such as group driving may be triggered for UGRs driving within the pedestrian region.

For example, the presence of a pedestrian may be detected by the UGR using the UGR's own sensor information and/or information received from neighboring RSUs, other UGRs, ITS stations, or service providers (e.g., VRU awareness, sensor data).

For example, when the above operation is triggered, the triggered event is reported by the UGR (or RSU, ITS station, or service provider) to other UGRs driving on the sidewalk/crosswalk to request cooperation for virtual group-based driving. In addition, the following information may be shared with other UGRs to make virtual group-based travel more efficient.
- the presence/position/speed/direction of the detected pedestrian
- the position/ID/speed/direction/acceleration/planned path of (leading) UGR for virtual group-based driving

It is apparent that the above-described examples of proposed methods may also be included as one of the implementation methods of the present disclosure, and thus may be considered as a type of proposed method.

On the other hand, the content of the present disclosure is not limited to uplink or downlink communication, but can also be used for direct communication between UEs, in which a base station or a relay node, etc. may use the method proposed above. In addition, although UE in this disclosure refers to a user's device, if a network equipment such as a base station transmits/receives signals according to a communication method between UEs, it may also be considered as a kind of UE.

Furthermore, the rules may be defined such that information for whether the above proposed methods are applied (or information for the rules of the above proposed methods) is informed by a base station to a UE or by a transmitting UE to a receiving UE via a predefined signal (e.g., a physical layer signal or a higher layer signal).

According to one embodiment of the present disclosure, when a robot or the like coexisting and driving with a pedestrian on a sidewalk or at an intersection observes and/or predicts that it is obstructing the pedestrian's traffic, the robot or the like may perform an operation, such as pausing, changing the driving path, or group driving with other robots or the like, to obtain the maximum efficiency driving gain without obstructing the pedestrian's traffic.

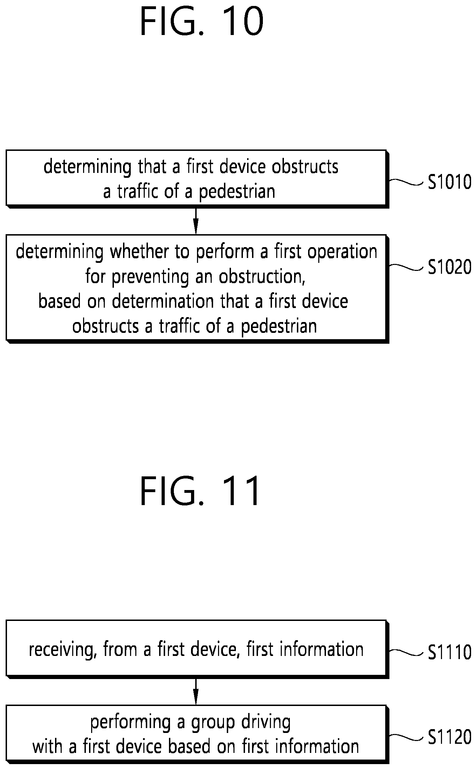

FIG. 10 shows a procedure for a first device to drive based on wireless communication, according to one embodiment of the present disclosure. The embodiment of FIG. 10 may be combined with various embodiments of the present disclosure.

Referring to FIG. 10, in step S1010, a first device may determine that the first device obstructs a traffic of a pedestrian. In step S1020, the first device may determine whether to perform a first operation for preventing the obstruction, based on the determination that the first device obstructs the traffic of the pedestrian. For example, the first operation may include a group driving with a second device.

For example, the first operation may include a modification of a driving path or a pause of a driving.

For example, that the first device obstructs the traffic of the pedestrian may be determined based on at least one of a distance between the first device and a third device being less than or equal to a threshold value, the first device occupying a passage of the pedestrian, a driving speed of the first device being greater than or equal to a first threshold value, or a length of an overlapping path of a driving path of the first device and a driving path of the pedestrian being greater than or equal to a second threshold value.

For example, additionally, the first device may transmit, to the second device, first information. For example, the first operation may be the group driving, the first information may include at least one of a presence of the first device, a position of the first device, or information for a group driving region, and the first operation may be performed based on the first information.

For example, the first operation may be the group driving, and first operation may be determined to be performed based on the first device being positioned within a group driving region.

For example, the group driving region may include at least one of a sidewalk, a crosswalk, or a shoulder.

For example, additionally, the first device may receive, from a third device, first information. For example, that the first device obstructs the traffic of the pedestrian may be determined based on the first information.

For example, the third device may be a server or a robot.

For example, the first information may include at least one of a position of the third device, a driving speed of the third device, a driving direction of the third device, or a driving acceleration of the third device.

For example, the first information may include a location of the first device, a driving speed of the first device, a driving direction of the first device, or a driving acceleration of the first device.

For example, the first information may be information indicating that the first device obstructs the traffic of the pedestrian.

For example, the first operation may be a group driving, and the first device may be a leader device related to the group driving.

For example, additionally, the first device may receive, from a third device, first information. For example, the first information may be information that commands to perform the first operation, and the first operation may be determined to be performed, based on the first information.

The embodiments described above may be applied to various devices described below. For example, a processor 102 of a first device 100 may determine that the first device 100 obstructs a traffic of a pedestrian. And, the processor 102 of the first device 100 may determine whether to perform a first operation for preventing the obstruction, based on the determination that the first device 100 obstructs the traffic of the pedestrian. For example, the first operation may include a group driving with a second device 200.

According to an embodiment of the present disclosure, a first device driving based on wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining that the first device obstructs a traffic of a pedestrian; and determining whether to perform a first operation for preventing the obstruction, based on the determination that the first device obstructs the traffic of the pedestrian, wherein the first operation may include a group driving with a second device.

For example, the first operation may include a modification of a driving path or a pause of a driving.

For example, that the first device obstructs the traffic of the pedestrian may be determined based on at least one of a distance between the first device and a third device being less than or equal to a threshold value, the first device occupying a passage of the pedestrian, a driving speed of the first device being greater than or equal to a first threshold value, or a length of an overlapping path of a driving path of the first device and a driving path of the pedestrian being greater than or equal to a second threshold value.

For example, additionally, the operations may comprise: transmitting, to the second device, first information. For example, the first operation may be the group driving, the first information may include at least one of a presence of the first device, a position of the first device, or information for a group driving region, and the first operation may be performed based on the first information.

For example, the first operation may be the group driving, and first operation may be determined to be performed based on the first device being positioned within a group driving region.

For example, the group driving region may include at least one of a sidewalk, a crosswalk, or a shoulder.

For example, additionally, the operations may comprise: receiving, from a third device, first information. For example, that the first device obstructs the traffic of the pedestrian may be determined based on the first information.

For example, the third device may be a server or a robot.

For example, the first information may include at least one of a position of the third device, a driving speed of the third device, a driving direction of the third device, or a driving acceleration of the third device.

For example, the first information may include a location of the first device, a driving speed of the first device, a driving direction of the first device, or a driving acceleration of the first device.

For example, the first information may be information indicating that the first device obstructs the traffic of the pedestrian.

For example, the first operation may be a group driving, and the first device may be a leader device related to the group driving.

For example, additionally, the operations may comprise: receiving, from a third device, first information. For example, the first information may be information that commands to perform the first operation, and the first operation may be determined to be performed, based on the first information.

According to an embodiment of the present disclosure, a device adapted to control a first robot may be proposed. For example, the device may comprise: at least one processor; and at least one memory operably connected to the at least one processor and storing instructions that, based on being executed by the at least one processor, cause the first robot to perform operations. For example, the operations may comprise: determining that the first robot obstructs a traffic of a pedestrian; and determining whether to perform a first operation for preventing the obstruction, based on the determination that the first robot obstructs the traffic of the pedestrian, wherein the first operation may include a group driving with a second robot.

According to an embodiment of the present disclosure, a non-transitory computer-readable storage medium storing instructions may be proposed. For example, the instructions, based on being executed, may cause a first device to: determine that the first device obstructs a traffic of a pedestrian; and determine whether to perform a first operation for preventing the obstruction, based on the determination that the first device obstructs the traffic of the pedestrian, wherein the first operation may include a group driving with a second device.

FIG. 11 shows a procedure for a second device to drive based on wireless communication, according to one embodiment of the present disclosure. The embodiment of FIG. 11 may be combined with various embodiments of the present disclosure.

Referring to FIG. 11, in step 1110, a second device may receive, from a first device, first information. In step S1120, the second device may perform a group driving with the first device based on the first information. For example, the first information may include at least one of a presence of the first device, a position of the first device, or information for a group driving region.

For example, the first device and the second device may be robots.

The embodiments described above may be applied to various devices described below. For example, a processor 202 of a second device 200 may control a transceiver 206 to receive, from a first device 100, first information. And, the processor 202 of the second device 200 may perform a group driving with the first device 100 based on the first information. For example, the first information may include at least one of a presence of the first device 100, a position of the first device 100, or information for a group driving region.

According to an embodiment of the present disclosure, a second device driving based on wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first information; and performing a group driving with the first device based on the first information, wherein the first information may include at least one of a presence of the first device, a position of the first device, or information for a group driving region.

For example, the first device and the second device may be robots.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

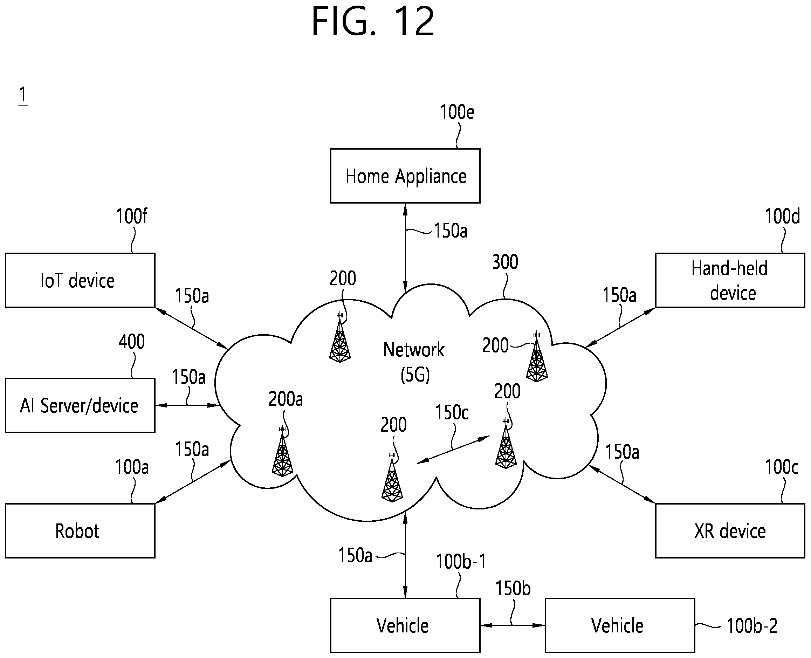

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

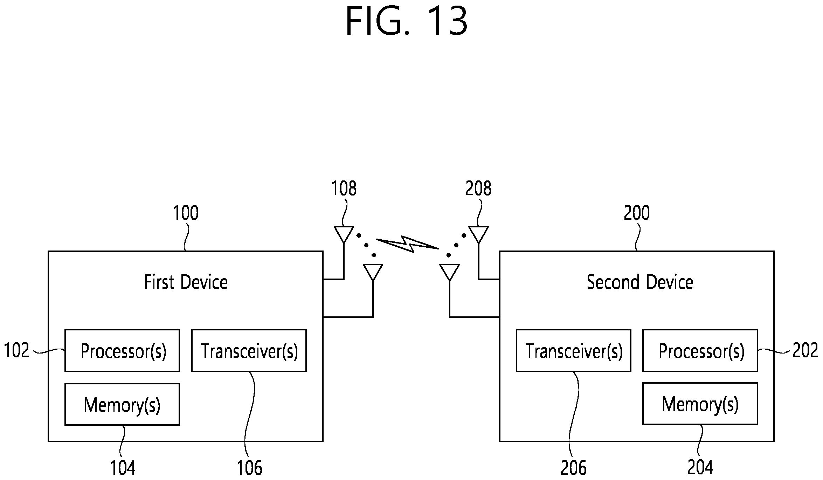

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

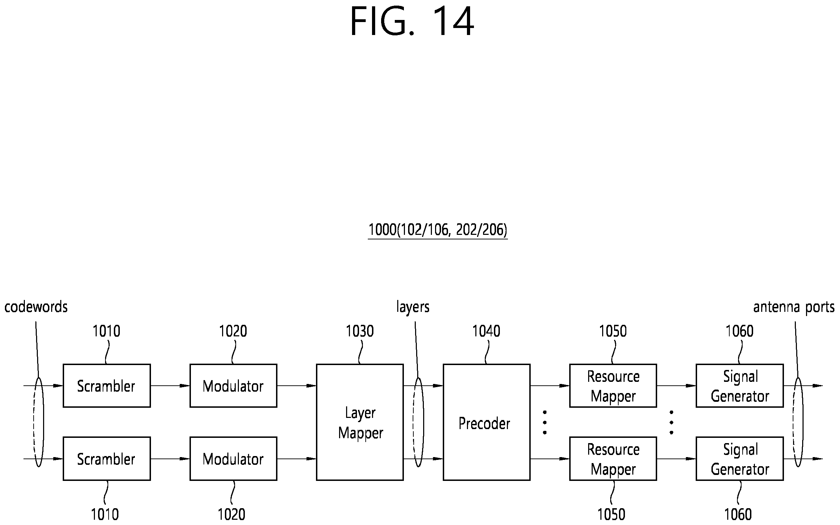

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13)may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

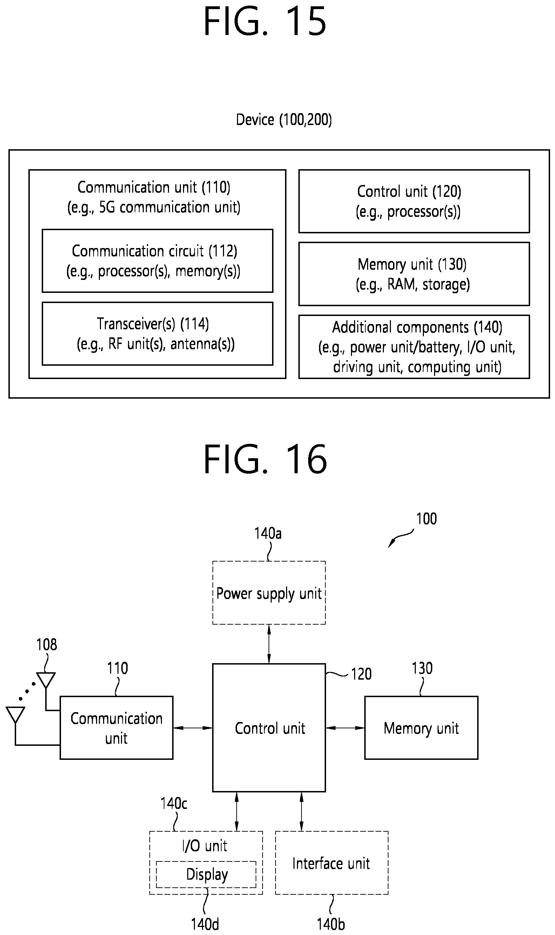

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

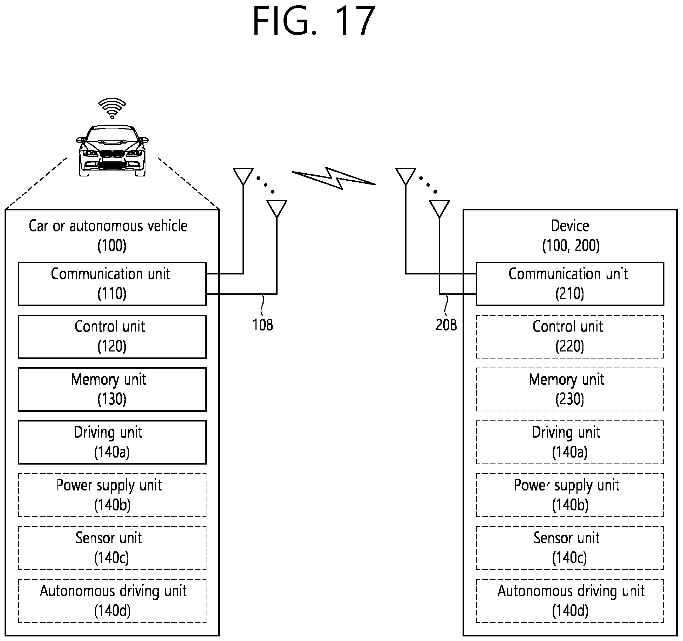

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for driving, by a first device, based on wireless communication, the method comprising:
determining that the first device obstructs a traffic of a pedestrian; and
determining whether to perform a first operation for preventing the obstruction, based on the determination that the first device obstructs the traffic of the pedestrian,
wherein the first operation includes a group driving with a second device.

2. The first device of claim 1, wherein the first operation includes a modification of a driving path or a pause of a driving.

3. The first device of claim 1, wherein that the first device obstructs the traffic of the pedestrian is determined based on at least one of a distance between the first device and a third device being less than or equal to a threshold value, the first device occupying a passage of the pedestrian, a driving speed of the first device being greater than or equal to a first threshold value, or a length of an overlapping path of a driving path of the first device and a driving path of the pedestrian being greater than or equal to a second threshold value.

4. The first device of claim 1, further comprising:
transmitting, to the second device, first information,
wherein the first operation is the group driving,
wherein the first information includes at least one of a presence of the first device, a position of the first device, or information for a group driving region, and
wherein the first operation is performed based on the first information.

5. The first device of claim 1, wherein the first operation is the group driving, and
wherein first operation is determined to be performed based on the first device being positioned within a group driving region.

6. The first device of claim 5, wherein the group driving region includes at least one of a sidewalk, a crosswalk, or a shoulder.

7. The first device of claim 1, further comprising:
receiving, from a third device, first information,
wherein that the first device obstructs the traffic of the pedestrian is determined based on the first information.

8. The first device of claim 7, wherein the third device is a server or a robot.

9. The first device of claim 7, wherein the first information includes at least one of a position of the third device, a driving speed of the third device, a driving direction of the third device, or a driving acceleration of the third device.

10. The first device of claim 7, wherein the first information includes a location of the first device, a driving speed of the first device, a driving direction of the first device, or a driving acceleration of the first device.

11. The first device of claim 7, wherein the first information is information indicating that the first device obstructs the traffic of the pedestrian.

12. The first device of claim 1, wherein the first operation is a group driving, and
wherein the first device is a leader device related to the group driving.

13. The first device of claim 1, further comprising:
receiving, from a third device, first information,
wherein the first information is information that commands to perform the first operation, and
wherein the first operation is determined to be performed, based on the first information.

14. A first device driving based on wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
determining that the first device obstructs a traffic of a pedestrian; and
determining whether to perform a first operation for preventing the obstruction, based on the determination that the first device obstructs the traffic of the pedestrian,
wherein the first operation includes a group driving with a second device.

15. A device adapted to control a first robot, the device comprising:
at least one processor; and
at least one memory operably connected to the at least one processor and storing instructions that, based on being executed by the at least one processor, cause the first robot to perform operations,
wherein the operations comprise:
determining that the first robot obstructs a traffic of a pedestrian; and
determining whether to perform a first operation for preventing the obstruction, based on the determination that the first robot obstructs the traffic of the pedestrian,
wherein the first operation includes a group driving with a second robot.

16. A non-transitory computer-readable storage medium storing instructions that, based on being executed, cause a first device to:
determine that the first device obstructs a traffic of a pedestrian; and
determine whether to perform a first operation for preventing the obstruction, based on the determination that the first device obstructs the traffic of the pedestrian,
wherein the first operation includes a group driving with a second device.

17. A method for driving, by a second device, based on wireless communication, the method comprising:
receiving, from a first device, first information; and
performing a group driving with the first device based on the first information,
wherein the first information includes at least one of a presence of the first device, a position of the first device, or information for a group driving region.

18. The method of claim 17, wherein the first device and the second device are robots.

19. A second device driving based on wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
receiving, from a first device, first information; and
performing a group driving with the first device based on the first information,
wherein the first information includes at least one of a presence of the first device, a position of the first device, or information for a group driving region.

20. The second device of claim 19, wherein the first device and the second device are robots.
